# EUROPÄISCHE PATENTSCHRIFT

(11) **EP 1 715 498 B1**
(45) Veröffentlichungstag und Bekanntmachung des Hinweises auf die Patenterteilung: **02.01.2008**
(21) Anmeldenummer: 06400013.6
(22) Anmeldetag: 16.03.2006
(51) Int. Cl.: H01H 36/00, B60Q 1/00

(54) **Schalter, insbesondere Lenkstockschalter**
Switch, in particular sterring column switch
Commutateur, en particulier commutateur de colonne de direction

(30) Priorität: 18.04.2005 DE 102005018289
(43) Veröffentlichungstag der Anmeldung: 25.10.2006
(73) Patentinhaber: Valeo Schalter und Sensoren GmbH, 74321 Bietigheim-Bissingen (DE)
(72) Erfinder: Hasch, Martin, 71701 Schwieberdingen (DE); Lipfert, Rainer, 74076 Heilbronn (DE); Simonis, Karl, 75428 Illingen (DE); Grüner, Roland, 71732 Tamm (DE); Binder, Bernd, 74372 Sersheim (DE); Suchanek, Jürgen, 74363 Güglingen (DE)
(74) Vertreter: Bulling, Alexander

(56) Entgegenhaltungen:
- EP-A- 0 497 191
- DE-A1- 3 423 723
- DE-A1- 19 922 500
- US-A- 6 118 089

## Beschreibung

Die Erfindung betrifft einen Schalter, insbesondere einen Lenkstockschalter zur Anordnung an einen Lenkstock eines Fahrzeugs.

Aus der DE 199 22 500 A1 ist ein solcher Schalter bekannt geworden, bei dem ein Schalthebel mit zwei bewegungsgekoppelten Schaltgliedern vorgesehen ist, deren Schaltlagen berührungslos von Induktionsmessern bzw. Schutzrohrkontakten erfasst werden können. Die Induktionsmesser bzw. Schutzrohrkontakte sind dabei an einer Leiterplatte angeordnet, die ihrerseits an einer Grundplatte anliegt. In der Grundplatte sind Aussparungen vorgesehen, um eine sichere Erfassung der Schaltglieder zu ermöglichen. Ein solcher Stand der Technik hat sich als vergleichsweise aufwendig herausgestellt. Zum einen sind zwei verschiedenartig ausgebildete Schaltglieder vorgesehen; für jede Achse, um die der Schalthebel schwenkbar ist, wird ein eigenes Schaltglied bereit gestellt. Ferner ist ein derartiger Schalter vergleichsweise schmutzempfindlich, da bei Schmutzablagerungen in den Aussparungen ein genaues Erfassen der jeweiligen Schaltglieder, wenn überhaupt, nur schwer möglich ist.

Der vorliegenden Erfindung liegt die Aufgabe zugrunde, einen berührungslos arbeitenden Schalter, insbesondere einen Längsstockschalter bereit zu stellen, der den genannten Nachteilen Abhilfe leistet. Der Schalter soll dabei einen einfachen Aufbau aufweisen und soll dennoch funktionssicher betreibbar sein.

Diese Aufgabe wird durch einen Schalter gelöst, mit einem betätigbaren Schalthebel, mit einem mit dem Schalthebel bewegungsgekoppelten Schaltglied, wobei das eine Schaltglied um wenigstens zwei quer zueinander angeordnete Achsen schwenkbar ist und im Bereich seiner Oberfläche verschieden polarisierte Magnetabschnitte aufweist und mit einer Magnetfeldsensoren aufweisenden Elektronikeinheit, wobei über die Magnetfeldsensoren die jeweilige Schaltlage des einen Schaltglieds erfasst und ein entsprechender Schaltvorgang eingeleitet werden kann, und wobei zwischen dem einen Schaltglied und den Magnetfeldsensoren eine Wandung angeordnet ist, die von dem vom Schaltglied ausgehenden Magnetfeld durchdrungen wird.

Ein derartiger Schalter hat den Vorteil, dass er zum einen aufgrund des lediglich einen vorzusehenden Schaltgliedes einen vergleichsweise einfachen Aufbau aufweist. Zum anderen wird sicher gestellt, dass eine Verschmutzung der Elektronikeinheit aufgrund der Wandung zwischen dem Schaltglied und den Magnetfeldsensoren nicht stattfinden kann. Die Wandung ist dabei geschlossen und ist derart ausgebildet, dass sie vom Magnetfeld, das vom Schaltglied ausgeht, durchdrungen werden kann. Beim erfindungsgemäßen Schalter wird folglich im Vergleich zum bekannten Stand der Technik Bauraum eingespart und die Funktionssicherheit wird erhöht.

Vorteilhafterweise kann vorgesehen sein, dass in der Wandung und/oder an der Wandung Flussleiter zur verbesserten Übertragung des Magnetfelds zu den Magnetfeldsensoren vorgesehen sind. Über die Flussleiter wird das Magnetfeld durch die Wandung den Magnetfeldsensoren übertragen. Die Flussleiter können dabei insbesondere Weicheisenteile sein, die insbesondere in die Wandung eingebettet sein können. Vorteilhafterweise ist dabei für jeden vorzusehenden Magnetfeldsensor ein ihm zugewandter Flussleiter vorgesehen. Bei beispielsweise insgesamt vier Magnetfeldsensoren sind dann vier Flussleiter im Detektionsbereich der Magnetfeldsensoren vorgesehen.

Vorteilhafterweise ist die Wandung Teil eines Gehäuses der Elektronikeinheit und/oder einer Mechanikeinheit, die die Lagerung des Schalthebels und/oder des Schaltgliedes beinhaltet. Ein derartiger Aufbau ist deshalb besonders vorteilhaft, weil zum einen die Elektronikeinheit und/oder zum anderen die Mechanikeinheit als geschlossene, separate Module vorgesehen sein können. Die Elektronikeinheit beinhaltet dabei vorteilhafterweise eine Leiterplatine, auf der die Magnetfeldsensoren angeordnet sind. Im Gehäuse der Elektronikeinheit können dann ggf. Flussleiter vorgesehen sein. Beim Fügen der Elektronikeinheit mit der Mechanikeinheit nehmen die Flussleiter dann die vorgesehene Position im Bereich der Oberfläche des einen Schaltgliedes ein. Wie bereits erwähnt, kann auch die Mechanikeinheit in einem vorzugsweise wenigstens weitgehend geschlossenen Gehäuse untergebracht sein. Für den Fall, dass die Elektronikeinheit und die Mechanikeinheit im Bereich der Magnetfeldsensoren bzw. des Schaltgliedes eine Wandung aufweist, ist das Schaltglied bzw. dessen Magnetabschnitte so auszulegen, dass das Magnetfeld dann beide Wandungen durchdringt. Hierzu können, wie bereits erwähnt, die Flussleiter vorgesehen sein, die dann vorzugsweise beide Wandungen durchgreifen. Denkbar ist auch, dass in jeder Wandung Flussleiter angeordnet sind, die im montierten Zustand dann einander gegenüberliegen oder aneinander anliegen.

Vorteilheifterweise kann erfindungsgemäß vorgesehen sein, dass die Geometrie der den Magnetfeldsensoren zugewandten Oberfläche des Schaltgliedes derart ausgebildet ist, dass der Abstand zwischen der Oberfläche des Schaltgliedes und den Magnetfeldsensoren in jeder Schaltlage gleich ist. Dies hat den Vorteil, dass eine Schwächung des Magnetfeldes beim Betätigen der Schalthebels aufgrund einer Änderung der Entfernung des Schaltgliedes zu den Magnetfeldsensoren nicht stattfinden kann. Hierdurch wird die Funktionssicherheit des Schalters wesentlich erhöht.

Vorteilhafterweise ist dabei die den Magnetfeldsensoren zugewandte Oberfläche des Schaltgliedes als Kugelsegment ausgebildet. Um einen gleichen Abstand bei verschiedenen Schaltlagen zu erreichen, kann erfindungsgemäß vorgesehen sein, dass der Krümmungsradius der Oberfläche dem orthogonalen Abstand einer Schwenkachse des Schalthebels oder des Schaltgliedes zur Oberfläche entspricht. Die Oberfläche des Schaltgliedes liegt dann auf der Kreisfläche eines Kreises mit einem Radius, der im Abstand von der Schwenkachse zur Oberfläche des Schaltgliedes entspricht.

Das Schaltglied kann erfindungsgemäß so ausgebildet sein, dass es auf seiner dem Magnetfeldsensoren abgewandten Seite einen zapfenartigen Vortsatz zur Befestigung am Schalthebel aufweist. Die Mittellängsachse dieses Vortsatz liegt dabei vorteilhafterweise in der einen Schwenkachse des Schaltgliedes bzw. des Schalthebels. Die andere Schwenkachse verläuft vorteilhafterweise rechtwinklig dazu.

Zur Befestigung des Vortsatzes am Schalthebel kann der Vortsatz mit dem Schalthebel beispielsweise versteckt oder verrastet werden. Ein Schaltglied, das eine kugelsegmentförmige Oberfläche aufweist und einen diese Oberfläche abgewandten Vortsatz ist insgesamt pilzartig ausgebildet.

Das Schaltglied selbst kann aus einem magnetisierten Material sein, das verschieden polarisierte Magnetabschnitte vorsieht. Das Schaltglied kann allerdings auch Magnetelemente umfassen, die in das Schaltglied, das beispielsweise aus Kunststoff ausgebildet ist, eingebracht sind.

Weitere vorteilhafte Ausgestaltungen und Einzelheiten der Erfindung sind der folgenden Beschreibung zu entnehmen, in der die Erfindung anhand des in der Figur dargestellten Ausführungsbeispiels näher beschrieben und erläutert ist.

Es zeigen:
- Figur 1: eine Seitenansicht eines aufgeschnittene erfindungsgemäßen Schalters;
- Figur 2: eine perspektivische Ansicht von schräg oben in einen erfindungsgemäßen Schalter gem. Figur 1 und
- Figur 3: eine perspektivische Ansicht von schräg unten in den erfindungsgemäßen Schalter gemäß Figur 1 und 2.

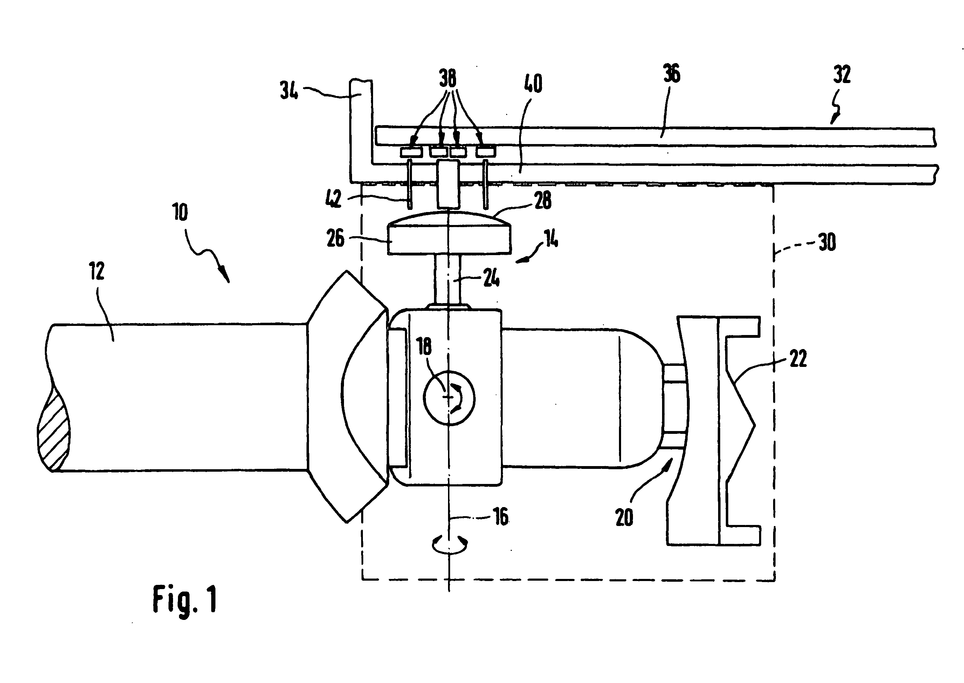

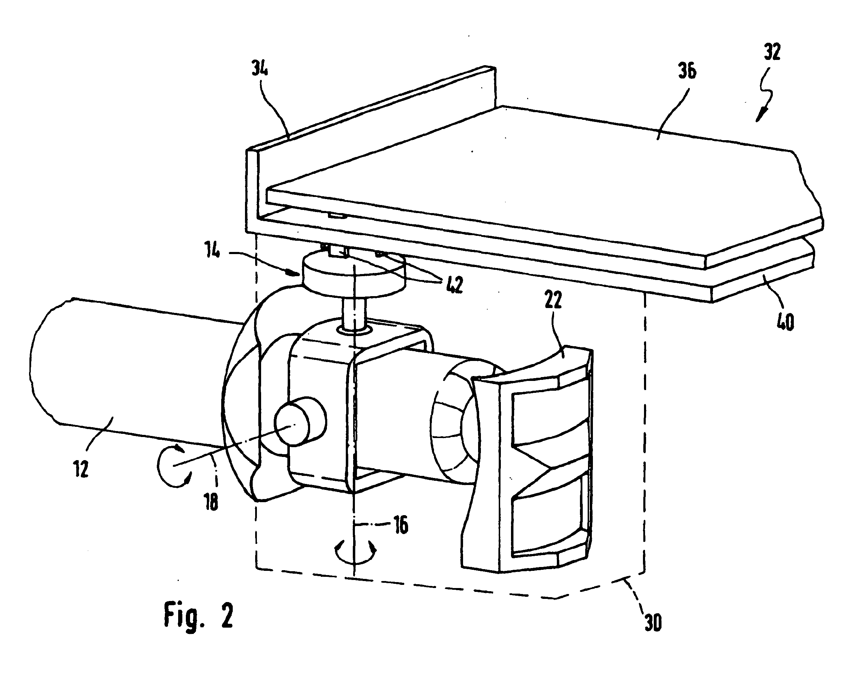

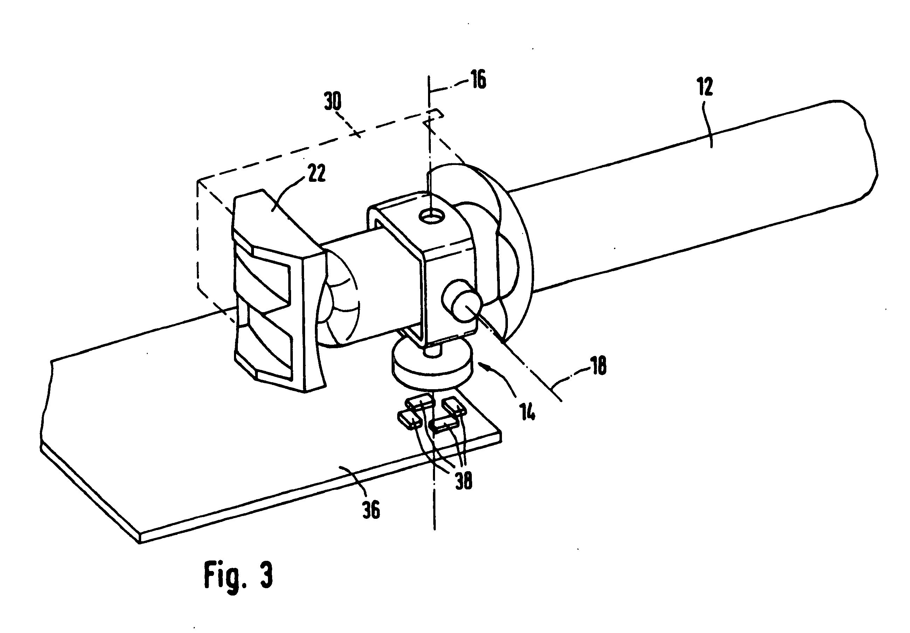

In den Figuren 1 bis 3 ist ein Schalter 10 dargestellt, der einen manuell betätigbaren Schalthebel 12 und ein mit dem Schalthebel 12 bewegungsgekoppeltes Schaltglied 14 umfasst. Der Schalthebel 12 ist dabei um die zwei quer zueinander angeordneten Achsen 16 und 18 verschwenkbar gelagert.

Um definierte Schaltstellungen einzunehmen, läuft das in der Figur 1 gezeigte freie Ende 20 des Schalthebels 12 in einer Schaltkulisse 22.

Das Schaltglied 14 ist pilzartig ausgestaltet und weist einen zylindrischen Vortsatz 24 und einen Teller 26, der auf seiner dem Vortsatz abgewandten Seite eine kugelsegmentartige Oberfläche 28 vorsieht. Das den Teller 26 abgewandte Ende des Vortsatzes 24 ist dabei in eine am Schalthebel 12 vorgesehene Aussparung eingesteckt.

Die doppelte Lagerung des Schalthebels 12 um die Achsen 16 und 18 ist in einer Mechanikeinheit untergebracht, die in den Figuren gestrichelt mit dem Bezugszeichen 30 angeordnet ist. Die Mechanikeinheit 30 ist dabei als Modul ausgebildet, dass in ein nicht dargestelltes Schaltergrundgehäuse eingefügt werden kann.

In den Figuren ist neben der Mechanikeinheit 30 eine ebenfalls als Modul ausgebildete Elektronikeinheit 32 vorgesehen, die eine in einem Gehäuse 34 angeordnete Leiterplatine 36 umfasst. Auf der Leiterplatte 36 sind auf der Oberfläche 28 des Schaltglieds 14 zugewandten Seite insgesamt vier Magnetfeldsensoren 38 vorgesehen. Jeweils zwei Magnetfeldsensoren bilden dabei ein Magnetfeldsensorenpaar.

Die Oberfläche 28 des Schaltglieds 14 weist verschieden polarisierte Magnetabschnitte auf, wobei über die Magnetfeldsensoren 38 die jeweilige Schaltlage des Schaltglieds 14 und damit des Schalthebels 12 erfasst werden kann. Die Elektronikeinheit 32 leitet dann je nach erfasster Schaltlage einen entsprechenden Schaltvorgang ein.

Wie aus insbesondere der Figur 1 deutlich wird ist zwischen den Magnetfeldsensoren 38 und dem Schaltglied 14 eine geschlossene Wandung 40 des Gehäuses 34 der Elektronikeinheit 32 vorgesehen. Die Wandung 40 ist dabei so ausgebildet, dass das vom Schaltglied 14 ausgehende Magnetfeld die Wandung 40 derart durchdringt, dass die Magnetfeldsensoren 38 die Lage des Schaltglieds 14 sicher detektieren können. In der Figur ist das Gehäuse 34 der Elektronikeinheit nicht dargestellt.

Zur besseren Übertragung der Signale des Magnetfelds durch die Wandung 40 sind in die Wandung 40 im Bereich jedes der vier Magnetfeldsensoren jeweils ein Flussleiter 42 eingebettet. Die Flussleiter 42 durchragen dabei die Wandung 40 vollständig. Je nach Aufbau des Schalters und Art der Wandung können die Flussleiter 42 auch entfallen.

Die kugelsegmentförmig ausgebildete Oberfläche 28 des Schaltglieds 14 ist so gewählt, dass in jeder Schaltlage des Schalthebels 12 zwischen den Magnetfeldsensoren 38 bzw. den Flussleitern 42 und der Oberfläche 28 ein gleichbleibender Abstand vorhanden ist. Hierdurch wird die Stärke des erfassten Magnetfeldsignals nicht durch einen sich verändernden Abstand der Oberfläche 28 des Schaltglieds 14 zu den Magnetfeldsensoren 38 bzw. den Flussleitern 42 beeinflusst.

Die Krümmung der Oberfläche 28 kann dabei einen Radius aufweisen, der dem Abstand von der Oberfläche 28 zur Drehachse 18 entspricht. Das Schaltglied 14 kann vorteilhafterweise aus einem magnetisierten Material mit mehreren verschieden polarisierten Magnetabschnitte sein. Es ist auch denkbar, dass das Schaltglied 14 aus Kunststoff ist, in den an der Oberfläche 28 verschiedene Magnetelemente eingebettet sind.

## Patentansprüche

1. Schalter (10), insbesondere Lenkstockschalter zur Anordnung an einen Lenkstock eines Fahrzeuges, mit einem betätigbaren Schalthebel (12), mit einem mit dem Schalthebel (12) bewegungsgekoppelten Schaltglied (14), wobei das eine Schaltglied um wenigstens zwei quer zueinander angeordnete Achsen (16, 18) schwenkbar ist und im Bereich seiner Oberfläche (28) verschieden polarisierte Magnetabschnitte aufweist, und mit einer Magnetfeldsensoren (38) aufweisenden Elektronikeinheit (32), wobei über die Magnetfeldsensoren (38) die jeweilige Schaltlage des einen Schaltglieds (14) erfasst und ein entsprechender Schaltvorgang eingeleitet werden kann, **dadurch gekennzeichnet, dass** zwischen dem einen Schaltglied (14) und den Magnetfeldsensoren eine Wandung (40) angeordnet ist, die von dem vom Schaltglied (14) ausgehenden Magnetfeld durchdrungen wird.

2. Schalter (10) nach Anspruch 1, **dadurch gekennzeichnet, dass** in der Wandung (40) und/oder an der Wandung (40) Flussleiter (42) zur verbesserten Übertragung des Magnetfelds vorgesehen sind.

3. Schalter (10) nach Anspruch 1 oder 2, **dadurch gekennzeichnet, dass** die Wandung (40) Teil eines Gehäuses (34) der Elektronikeinheit (32) und/oder einer Mechanikeinheit (30) ist, die die Lagerung des Schalthebels und/oder des Schaltglieds beinhaltet.

4. Schalter (10) nach Anspruch 1, 2 oder 3, **dadurch gekennzeichnet, dass** die Geometrie der den Magnetfeldsensoren (38) zugewandten Oberfläche (28) des Schaltglieds derart ausgebildet ist, dass der Abstand zwischen der Oberfläche (28) des Schaltglieds (14) und den Magnetfeldsensoren (38) bzw. den Flussleitern (42) in jeder Schaltlage gleich ist.

5. Schalter (10) nach einem der vorhergehenden Ansprüche, **dadurch gekennzeichnet, dass** die Oberfläche (28) des Schaltglieds als Kugelsegment ausgebildet ist.

6. Schalter (10) nach Anspruch 5, **dadurch gekennzeichnet, dass** der Krümmungsradius der Oberfläche (28) dem orthogonalen Abstand einer Schwenkachse (18) des Schalthebels (12) oder des Schaltglieds (14) zur Oberfläche (28) entspricht.

7. Schalter (10) nach einem der vorhergehenden Ansprüche, **dadurch gekennzeichnet, dass** das Schaltglied (14) auf seiner den Magnetfeldsensoren abgewandten Seite einen zapfenartigen Vortsatz (24) zur Befestigung am Schalthebel (12) aufweist.

8. Schalter (10) nach einem der vorhergehenden Ansprüche, **dadurch gekennzeichnet, dass** das Schaltglied (14) aus einem magnetisierten Material ist und/oder dass am oder in das Schaltglied Magenelemente angeordnet oder eingebracht sind.

## Claims

1. A switch (10), in particular a steering column switch to be arranged on a steering column of a vehicle, having a gearshift lever (12), which can be actuated and has a shift member (14) movably coupled with the gearshift lever (12), wherein the one shift member is pivotable around at least two axes (16, 18), which are arranged transversely in respect to each other and have differently polarized magnetic sections, and having an electronic unit (32) having magnetic field sensors (38), wherein the respective shift position of the one shift member (14) can be detected by means of the magnetic field sensors (38), and a corresponding shifting process can be initiated, **characterized in that** a wall (40) is arranged between the one shift member (14) and the magnetic field sensors, through which a magnetic field emanating from the shift member (14) passes.

2. The switch (10) in accordance with claim 1, **characterized in that** flux conductors (42) for improved transmission of the magnetic field are provided in the wall (40) and/or on the wall (40).

3. The switch (10) in accordance with claim 1 or 2, **characterized in that** the wall (40) is a part of a housing (34) of the electronic unit (32) and/or of a mechanical unit (30) which contains the seating of the gearshift lever and/or the shift member.

4. The switch (10) in accordance with claim 1, 2 or 3, **characterized in that** the geometry of the surface (28) of the shift member facing the magnetic field sensors (38) is designed in such a way that the distance between the surface (28) of the shift member (14) and the magnetic field sensors (28), or the flux conductors (42), is identical in every shift position.

5. The switch (10) in accordance with one of the preceding claims, **characterized in that** the surface (28) of the shift member is embodied in the form of a segment of a sphere.

6. The switch (10) in accordance with claim 5, **characterized in that** the radius of curvature of the surface (28) corresponds to the orthogonal distance of a pivot axis (18) of the gearshift lever (12), or of the shift member (14), from the surface (28).

7. The switch (10) in accordance with one of the preceding claims, **characterized in that**, on its side facing away from the magnetic field sensors, the shift member (14) has a pin-like extension (24) for attachment to the gearshift lever (12).

8. The switch (10) in accordance with one of the preceding claims, **characterized in that** the shift member (14) is made of a magnetized material and/or that magnetic elements have been arranged on or introduced into the shift member.

## Revendications

1. Commutateur (10), en particulier commutateur de colonne de direction pour agencement sur une colonne de direction de véhicule automobile, avec une levier de commande (12) actionnable, avec un élément de contact (14) solidarisé en mouvement avec le levier de commande (12), lequel élément de contact peut pivoter autour d'au moins deux axes (16, 18) disposés perpendiculairement entre eux et présente dans la région de sa face supérieure (28) des segments magnétiques polarisés différemment, et avec une unité électronique (32) comportant des capteurs de champ magnétique (38), la position de commutation respective de l'élément de contact (14) pouvant être détectée par les capteurs de champ magnétique (38) et une opération de commutation correspondante pouvant être initiée, **caractérisé en ce qu'**entre l'élément de contact (14) et ses capteurs de champ magnétique est disposée une paroi (40) qui est traversée par le champ magnétique issu de l'élément de contact (14).

2. Commutateur (10) selon la revendication 1, **caractérisé en ce que** la paroi (40) et/ou le guide de flux (42) sur la paroi (40) sont prévus pour une améliorer la transmission du champ magnétique.

3. Commutateur (10) selon l'une quelconque des revendications 1 ou 2, **caractérisé en ce que** la paroi (40) est une partie d'un boîtier (34) de l'unité électronique (32) et/ou d'une unité mécanique (30) qui contient le logement du levier de commande et/ou de l'élément de contact.

4. Commutateur (10) selon l'une quelconque des revendications 1, 2 ou 3, **caractérisé en ce que** la géométrie de la face supérieure (28) de l'élément de contact, tournée vers les capteurs de champ magnétique (38), est conçue de telle sorte que la distance entre la face supérieure (28) de l'élément de contact (14) et les capteurs de champ magnétique (38) ou les guides de flux (42) est identique dans chaque position de commutation.

5. Commutateur (10) selon l'une quelconque des revendications précédentes, **caractérisé en ce que** la face supérieure (28) de l'élément de contact est conçue sous forme de segment sphérique.

6. Commutateur (10) selon la revendication 5, **caractérisé en ce que** le rayon de courbure de la face supérieure (28) correspond à la distance orthogonale d'un axe de pivotement (18) du levier de commande (12) ou de l'élément de contact (14) par rapport à la face supérieure (28).

7. Commutateur (10) selon l'une quelconque des revendications précédentes, **caractérisé en ce que** l'élément de contact (14) comporte sur son côté opposé aux capteurs de champ magnétique, un raccord (24) en forme de tenon pour fixation sur le levier de commande (12).

8. Commutateur (10) selon l'une quelconque des revendications précédentes, **caractérisé en ce que** l'élément de contact (14) est constitué d'un matériau magnétisant et/ou **en ce que** des éléments magnétiques sont disposés ou insérés sur ou dans l'élément de contact.
